# FASCICULE DE BREVET EUROPEEN

(11) **EP 4 003 917 B1**
(45) Date de publication et mention de la délivrance du brevet: **26.03.2025**
(21) Numéro de dépôt: 20734331.0
(22) Date de dépôt: 16.06.2020
(51) Int. Cl.: C02F 1/00, C02F 1/48, C02F 5/00

(54) **DISPOSITIF DE TRAITEMENT MECANIQUE D'UN FLUIDE TEL QUE L'EAU**
VORRICHTUNG ZUR MECHANISCHEN BEHANDLUNG EINER FLÜSSIGKEIT WIE WASSER
DEVICE FOR MECHANICALLY TREATING A FLUID SUCH AS WATER

(30) Priorité: 23.07.2019 FR 1908369
(43) Date de publication de la demande: 01.06.2022
(73) Titulaire: Drag'Eau, 68190 Ensisheim (FR)
(72) Inventeur: DRAGO, Giovanni, 68420 EGUISHEIM (FR); CONVERTINI, Nicola, 74015 MARTINA FRANCA (TA) (IT)
(74) Mandataire: Cabinet Laurent & Charras
(86) Numéro de dépôt international: PCT/EP2020/066581
(87) Numéro de publication internationale: WO 2021/013434

(56) Documents cités:
- EP-B1- 1 076 037
- WO-A1-2009/125451
- WO-A1-2011/135666
- DE-U1- 20 203 596
- DE-U1- 202008 009 583
- DE-U1- 202018 103 659
- US-A1- 2010 196 518
- DRAG'EAU: "Eficalk", 6 February 2019 (2019-02-06), XP093168536, Retrieved from the Internet <URL:https://web.archive.org/web/20190206000244if_/https://drag-al.com.br/Eficalk.pdf> [retrieved on 20240816]
- ONDREJ KUZELKA: "Odkalení topného a chladícího systému", 18 December 2017 (2017-12-18), XP093168534, Retrieved from the Internet <URL:https://www.youtube.com/watch?v=CaJRktN8dZE> [retrieved on 20240816]
- "Waterpipe Protector Aquaspin", 31 October 2017, article AQUASPIN: "Waterpipe Protector Aquaspin", XP055678065

## Description

### Domaine technique

La présente invention concerne un dispositif de traitement mécanique d'un fluide tel que l'eau, agencé pour être disposé sur le trajet d'un fluide circulant dans une canalisation d'une installation, pour restructurer ledit fluide afin d'éviter notamment les incrustations du calcaire et/ou la formation et le dépôt de boues et/ou les phénomènes de corrosion, ledit dispositif comportant un corps d'axe longitudinal pourvu à ses deux extrémités de deux embout-raccords délimitant un orifice d'entrée de fluide et un orifice de sortie de fluide, lesdits embout-raccords étant agencés pour monter ledit dispositif en série dans ladite canalisation, ledit corps comportant au moins un canal s'étendant entre ledit orifice d'entrée et ledit orifice de sortie pour le passage du fluide, et ledit dispositif comportant au moins un déflecteur agencé pour transformer un mouvement linéaire du fluide entrant dans ledit dispositif en un mouvement tourbillonnaire du fluide sortant dudit dispositif.

### Technique antérieure

On connait depuis des décennies différents dispositifs de traitement mécanique qui permettent de traiter des fluides en mouvement, comme l'eau, les solutions aqueuses, etc., de manière écologique, c'est-à-dire sans produit chimique, ni apport d'énergie, ni consommable, ni entretien. Ces traitements consistent notamment à améliorer les propriétés physicochimiques des fluides, à régénérer et à revitaliser l'eau, mais également à purifier l'eau pour protéger les installations contre le dépôt de calcaire, la formation et les dépôts de boues, etc. aussi bien dans les circuits fermés de fluide caloporteur des réseaux de chauffage et de climatisation, mais aussi dans les circuits ouverts des réseaux d'eau sanitaire, d'eau potable. On sait en effet que ces dépôts entraînent une usure prématurée des installations, une augmentation de la consommation énergétique, une baisse des rendements énergétiques, et une corrosion des réseaux d'eau.

A titre d'exemple, on peut citer les dispositifs décrits dans les publications suivantes : WO 81/02529 A1 qui soumet l'eau en circulation dans un conduit à un champ magnétique produit par des aimants permanents disposés autour dudit conduit pour réduire les dépôts de calcaire dans un circuit de chauffage ; EP 295 463 A2 qui soumet l'eau en circulation à travers un dispositif de traitement en série dans un conduit à un mouvement circulaire en forme d'hélice, combiné à un champ magnétique produit par des aimants permanents en contact avec l'eau pour dissoudre les sels contenus dans l'eau et notamment le carbonate de calcium afin qu'ils restent plus longtemps dans la phase dissoute évitant leur dépôt et facilitant leur élimination ; EP 1 810 952 A2 qui soumet l'eau en circulation à un mouvement circulaire en forme d'hélice à travers un logement à double paroi, combiné à une eau de source de haute qualité contenue dans la double paroi pour revitaliser l'eau ; US 2009/0321337 A1 qui soumet l'eau à des cristaux formant des motifs ayant pour effet de revitaliser l'eau ; FR 2 989 678 A1 qui soumet l'eau en circulation à travers un dispositif de traitement en série dans un conduit à un mouvement circulaire en forme d'hélice, combiné à une eau ultra pure pour clarifier durablement l'eau des réseaux fermés de chauffage, éliminer les dépôts métalliques et organiques et lutter contre la corrosion et l'abrasion.

On peut encore citer les dispositifs décrits dans les publications suivantes : DE 20 2018 103659 U1 qui soumet l'eau à une circulation sinusoïdale et à un champ magnétique produit par des aimants permanents disposés à l'extérieur, autour des orifices d'entrée et de sortie, pour réduire les dépôts de calcaire dans un circuit de chauffage; DE 20 2008 009583 U1 qui soumet l'eau à une circulation hélicoïdale dans un canal annulaire autour d'un corps central et à de la chaleur diffusée par une source d'énergie contenue dans ledit corps central pour oxygéner et purifier l'eau potable.

Un autre dispositif correspondant au premier mode de réalisation qui ne fait pas partie de la présente invention est présenté dans les sites Web suivants: https://drag-al.com.br/Eficalk.pdf et https:// www.youtube.com/watch?v=CaJRktN8dZE.

Ces dispositifs de traitement connus ont l'inconvénient de constituer des dispositifs dédiés souvent à un type de traitement et/ou d'application, nécessitant de concevoir différents dispositifs pour répondre à différents types de traitement et/ou d'applications. En outre, certains dispositifs créent des pertes de charge qui sont préjudiciables pour le rendement d'une installation, sont difficiles à installer, peuvent être encombrants et/ou peuvent perturber l'environnement, peuvent larguer des particules dans l'eau en circulation, etc.

### Présentation de l'invention

La présente invention vise à pallier ces inconvénients en proposant un dispositif de traitement de conception simple, fiable, de qualité alimentaire, durable, sans entretien, sans consommable, modulaire pour qu'il soit polyvalent, c'est-à-dire facilement adaptable ou configurable en fonction des traitements souhaités et des applications visées, engendrant des pertes de charges négligeables voire nulles, conçu de manière réversible pour être facile à installer, sans risque d'erreur de montage, écologique et respectueux de l'environnement.

Dans ce but, l'invention concerne un dispositif selon la revendication 1.

Selon l'invention, ledit dispositif comporte un tube central s'étendant dans l'axe longitudinal, et ledit au moins un déflecteur comporte un tronçon de montage assemblé audit tube central, et une tête pourvue de moyens de déviation du fluide et reliée audit tronçon de montage par une base.

Selon l'invention, la tête dudit au moins un déflecteur est une tête plate perpendiculaire audit axe longitudinal, et lesdits moyens de déviation du fluide sont constitués de pales radiales et inclinées dans la direction du fluide dudit orifice d'entrée vers ledit orifice de sortie.

Dans cette seconde variante, ledit dispositif peut comporter deux déflecteurs comportant chacun des pales, disposés dans un même sens, en face respectivement dudit orifice d'entrée et dudit orifice de sortie de telle sorte que ledit dispositif n'est pas réversible. De manière avantageuse, lesdits canaux sont répartis régulièrement autour dudit tube central. Ils peuvent comporter au moins deux jeux de canaux de diamètres différents, alternés entre eux et distribués régulièrement autour dudit tube central.

Au moins une partie desdits canaux forme un logement pour recevoir au moins un élément réactif disposé librement sur le trajet dudit fluide en circulation à travers ledit dispositif, de sorte que ledit au moins un élément réactif entre en vibration, percute les parois du canal qui le contient, et transmet au fluide des ondes mécaniques sonores ayant pour effet de détruire les boues et/ou les cristaux de calcaire présentes dans le fluide.

La base desdits déflecteurs peut avoir une dimension transversale supérieure à la dimension transversale dudit tube central et inférieure à la dimension transversale intérieure dudit corps pour obturer partiellement au moins une partie desdits canaux et former une butée axiale pour ledit au moins un élément réactif.

Ledit au moins un élément réactif peut être choisi dans le groupe de matières comprenant les céramiques, les minéraux, les matières organiques, le verre, les pierres précieuses et/ou semi-précieuses, ou une combinaison de ces matières, et peut présenter une forme choisie dans le groupe comprenant les billes, les granulés, les fragments, les cylindres, ces formes étant pleines ou creuses, ou une combinaison de ces formes.

Ledit au moins un ou les deux déflecteurs peuvent être creux et comporter une cavité fermée par un bouchon. Dans ce cas, ils peuvent également comporter au moins un élément actif logé dans ladite cavité, choisi dans le groupe comprenant des émetteurs d'ondes mécaniques, des émetteurs de champ magnétique, des émetteurs d'ondes électromagnétiques, ou une combinaison de ces émetteurs, et agencé pour transmettre au fluide lesdites ondes ayant pour effet de détruire les boues et/ou les cristaux de calcaire présentes dans le fluide.

Ledit tube central peut être creux et également former un logement pour recevoir au moins un élément actif.

Ledit dispositif constitue avantageusement un dispositif modulaire et l'assemblage des bouchons sur les déflecteurs et/ou l'assemblage des déflecteurs sur le tube central sont des assemblages démontables de sorte à pouvoir modifier le contenu desdites cavités, dudit tube central et/ou desdits canaux en fonction du traitement d'eau à effectuer.

### Brève description des figures

La présente invention et ses avantages apparaîtront mieux dans la description suivante d'un mode de réalisation donné à titre d'exemple non limitatif, en référence aux dessins annexés, dans lesquels:
- la figure 1 est une vue éclatée en perspective d'un dispositif selon une première forme de réalisation qui ne fait pas partie de la présente invention,
- la figure 2 est une vue de dessus du dispositif de la figure 1 après montage,
- la figure 3 est une vue éclatée en plan du dispositif de la figure 1,
- la figure 4 est une vue de dessus du dispositif de la figure 3 sans l'embout-raccord,
- la figure 5 est une vue en coupe axiale du dispositif de la figure 1 après montage,
- la figure 6 est une vue de dessus du dispositif de la figure 5 sans l'embout-raccord ni le déflecteur,
- la figure 7 est une vue en perspective d'un dispositif selon une seconde variante de réalisation de l'invention, sans les embouts-raccords,
- la figure 8 est une vue de dessus du dispositif de la figure 7, et
- la figure 9 est une vue en coupe axiale du dispositif de la figure 7.

### Description détaillée de l'invention

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures.

En référence aux figures, le dispositif 1, 100 de traitement selon l'invention est prévu pour être monté en série dans tout type d'installation sanitaire, de chauffage, de climatisation et/ou de refroidissement, en circuit ouvert ou en circuit fermé. Il est notamment prévu pour être inséré dans une canalisation (non représentée) appartenant à ladite installation, de manière à pouvoir être traversé par un fluide en mouvement, tel que l'eau avec ou sans glycol, avec ou sans additifs tels que des inhibiteurs de corrosion, régulateurs de PH et autres produits chimiques, les solutions aqueuses ou autres fluides. Il a pour objectif d'agir sur le fluide en circulation pour le secouer et le restructurer afin d'améliorer ses propriétés physicochimiques et/ou éviter les dépôts du calcaire et/ou la formation et le dépôt de boues et/ou les phénomènes de corrosion. Il constitue un dispositif mécanique simple et polyvalent comme expliqué ci-après grâce à un mode de construction modulaire qui permet de le configurer aisément et de le rendre compatible avec l'application visée.

A cet effet, le dispositif 1, 100 selon l'invention comporte un corps 2 d'axe longitudinal A pourvu à ses deux extrémités de deux embout-raccords 3, 4, délimitant un orifice d'entrée 5 de fluide et un orifice de sortie 6 de fluide. Les embout-raccords 3, 4 et les orifices d'entrée 5 et de sortie 6 sont de préférence centrés sur l'axe longitudinal A pour créer un dispositif 1, 100 rectiligne aligné dans l'axe de la canalisation. Les embout-raccords 3, 4 sont assemblés audit corps 2 par exemple par vissage. Ils comportent à cet effet un tronçon de montage 7 pourvu d'un alésage intérieur 8 taraudé coopérant avec un tronçon extérieur 9 fileté prévu dans les extrémités dudit corps 2. Bien entendu, tout autre moyen d'assemblage équivalent peut convenir, l'essentiel est que lesdits embout-raccords 3, 4 soient démontables pour accéder audit corps 2. Les embout-raccords 3, 4 comportent en outre un tronçon d'extrémité 10 pourvu d'un alésage intérieur 11 taraudé permettant de fixer ledit dispositif 1 à des raccords hydrauliques prévus aux extrémités d'une canalisation. Le pas de vis du taraudage est bien entendu adapté au pas de vis du filetage des raccords hydrauliques, qui sont généralement normalisés pays par pays. On peut également utiliser des brides de raccordement dans les autres cas. Le tronçon d'extrémité 10 comporte en outre des moyens de préhension 12 pour un outil, par exemple une forme carrée, permettant le serrage et le desserrage des embout-raccords 3, 4 sur les raccords hydrauliques correspondants de ladite canalisation. Toute autre forme des moyens de préhension 12 peut convenir, l'essentiel est qu'elle soit adaptée à l'outil utilisé pour le raccordement hydraulique. Le dispositif 1, 100 présente une forme générale cylindrique car il est conçu de manière compacte et peu encombrante pour s'insérer en série dans une canalisation facilement quel que soit l'espace environnant disponible. Bien entendu, toute autre forme différente peut convenir. Il peut être complété par des moyens d'étanchéité (non représentés) disposés entre les surfaces en contact dudit corps 2 et desdits embout-raccords 3, 4, et classiquement à l'intérieur des raccords hydrauliques, tels que des joints toriques, des joints annulaires, du ruban Téflon^{®}, ou similaires.

Le corps 2 comporte une pluralité de canaux 13, 13' pour le passage du fluide au travers dudit dispositif 1, 100. Ces canaux 13, 13' sont rectilignes, parallèles à l'axe longitudinal A et traversants. Ils peuvent comporter au moins deux jeux de canaux 13, 13', les canaux 13 d'un premier jeu ayant une dimension transversale supérieure à celle des canaux 13' du second jeu. Le nombre de jeux de canaux différents n'est pas limité à deux. Il peut varier en fonction de la dimension transversale du corps 2. Dans l'exemple représenté, les canaux 13, 13' sont cylindriques et la dimension transversale correspond au diamètre desdits canaux. Néanmoins, toute autre forme de canaux peut convenir. Ils sont répartis autour de l'axe longitudinal A, préférentiellement de manière régulière. A cet effet, les canaux 13, 13' des deux jeux sont alternés pour permettre une répartition uniforme dudit fluide au travers dudit dispositif 1, 100. Ces canaux 13, 13' sont en outre adjacents, voire tangents l'un avec l'autre pour optimiser le volume de passage du fluide par rapport au volume du corps 2. De manière tout à fait avantageuse, le diamètre des canaux 13, 13' et leur nombre sont déterminés par calcul pour que la somme de ces diamètres soit égale ou très proche du diamètre intérieur de la canalisation de manière à réduire au minimum voire à supprimer les pertes de charge dues audit dispositif 1, 100. Le diamètre intérieur de la canalisation peut correspondre à celui des embout-raccords 3, 4.

Une partie au moins de ces canaux 13, 13' contient un ou plusieurs éléments réactifs 15 qui vont interagir avec le fluide en circulation pour en modifier sa structure moléculaire. Ces éléments réactifs 15 peuvent être choisis et adaptés en fonction de l'application visée et du traitement souhaité, dont plusieurs exemples sont donnés dans la littérature disponible sur ce sujet. Notamment, ils peuvent être réalisés dans des matières choisies dans le groupe comprenant les céramiques, les minéraux tels que le quartz, les matières organiques telles que l'ambre, le verre, les pierres précieuses et/ou semi-précieuses, ou une combinaison de ces matières. Ils peuvent également se présenter sous une ou plusieurs formes choisies dans le groupe comprenant les billes, les granulés, les fragments, les cylindres, ces formes pouvant être pleines ou creuses, ou une combinaison de ces formes.

Le dispositif 1, 100 comporte au moins un déflecteur 16, 160 centré sur l'axe longitudinal A et disposé en face de l'orifice d'entrée 6 pour dévier le fluide entrant et transformer instantanément un mouvement linéaire du fluide entrant dans le dispositif 1, 100 en un mouvement tourbillonnaire du fluide traversant et sortant dudit dispositif 1, 100. Le déflecteur 16, 160 est intercalé entre l'orifice d'entrée 6 et le corps 2, de sorte que la pluralité de canaux 13, 13' est située en aval du déflecteur 16, 160. Le déflecteur 16, 160 est assemblé au corps 2 pour tout moyen de fixation adapté. Dans les exemples illustrés, il est assemblé par vissage à un tube central 14, via un tronçon de montage 18 fileté coopérant avec un alésage intérieur 19 taraudé prévu dans les extrémités du tube central 14.

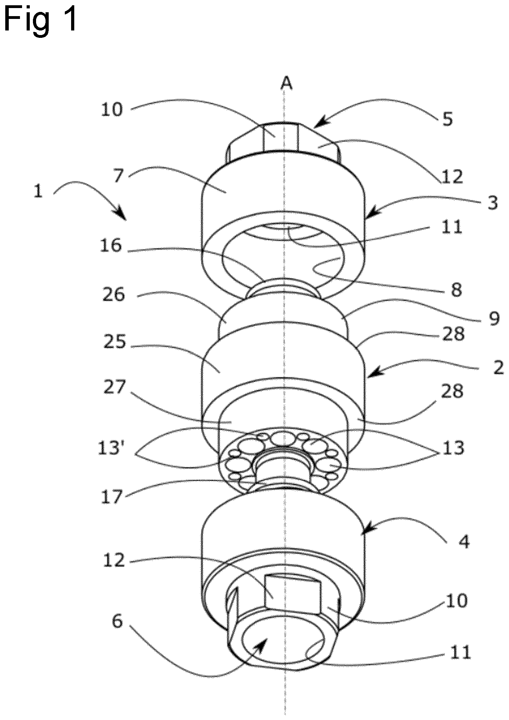

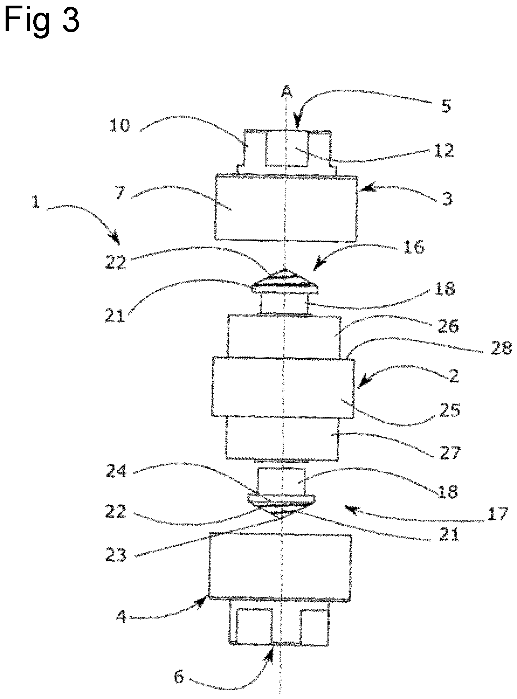

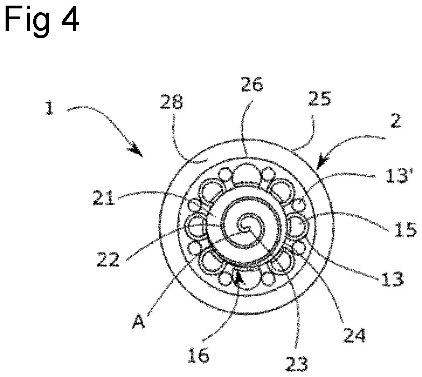

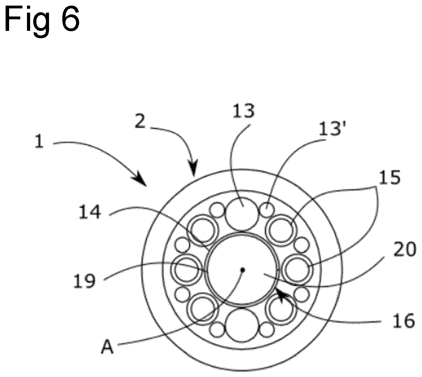

Dans une première forme de réalisation qui ne fait pas partie de la présente invention illustrée plus particulièrement dans les figures 1 à 6, le dispositif 1 comporte un déflecteur 16 et de préférence deux déflecteurs 16, 17 disposés respectivement en face de l'orifice d'entrée 6 et de l'orifice de sortie 7. Ils sont montés en opposition, dos à dos, centrés sur l'axe longitudinal A.

Les déflecteurs 16, 17 comportent chacun une tête conique 21 qui surmonte un tronçon de montage 18. Le sommet pointu de la tête conique 21 des déflecteurs 16, 17 est dirigé respectivement vers l'orifice d'entrée 5 et vers l'orifice de sortie 6. La tête conique 21 comporte des moyens de déviation sous la forme d'une spirale 22 qui a pour effet de dévier et de créer un mouvement tourbillonnaire du fluide entrant dans ledit dispositif 1, à la manière d'un Vortex. La spirale 22 est notamment réalisée par une rainure partant du sommet 23 de la tête conique 21, confondu avec l'axe longitudinal A, en direction de la base 24 de la tête conique 21.

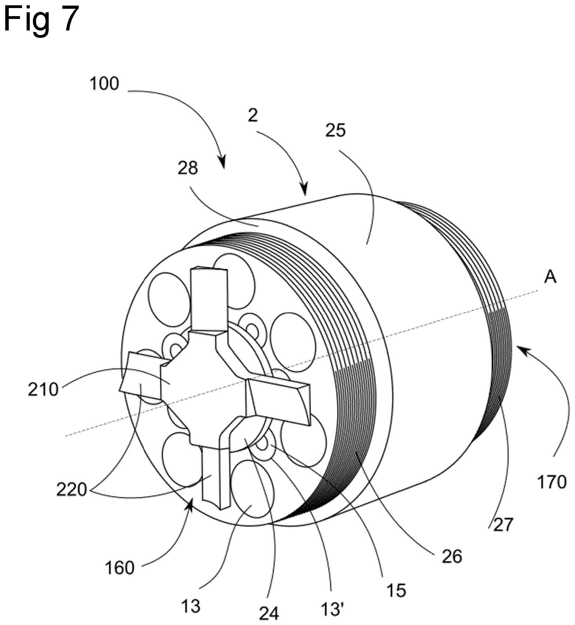

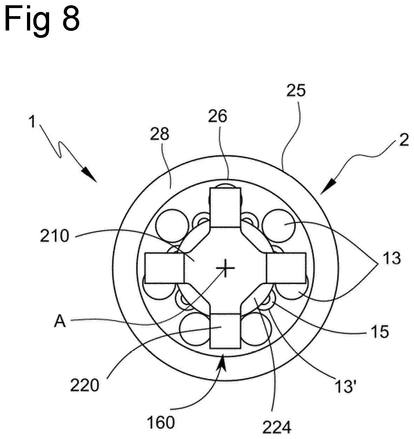

Dans une seconde forme de réalisation selon l'invention illustrée plus particulièrement dans les figures 7 à 9, le dispositif 1 comporte un déflecteur 160 et de préférence deux déflecteurs 160, 170, disposés respectivement en face de l'orifice d'entrée 6 et de l'orifice de sortie 7. Ils sont montés dans un même sens, centrés sur l'axe longitudinal A. Les déflecteurs 160, 170 comportent chacun une tête plate 210 qui surmonte un tronçon de montage 18. La tête plate 210 comporte des moyens de déviation sous la forme de pales 220 qui s'étendent radialement dans un plan perpendiculaire à l'axe longitudinal A. Les pales 220 sont inclinées dans la direction du fluide qui traverse le dispositif 100, c'est-à-dire de l'orifice d'entrée 6 vers l'orifice de sortie 7, pour dévier et créer un mouvement tourbillonnaire du fluide entrant dans ledit dispositif 1 et sortant dudit dispositif, à la manière d'un Vortex. Ainsi, les pales 220 du déflecteur 160 amont sont inclinées en direction des canaux 13, 13', et les pales 220 du déflecteur 170 aval sont inclinées en direction de l'orifice de sortie 7.

La base 24, 240 des déflecteurs 16, 17 ; 160, 170 présente une dimension transversale supérieure à la dimension transversale du tube central 14 et inférieure à la dimension transversale intérieure dudit corps 2 dans le but d'obturer partiellement les canaux 13, 13' qui peuvent renfermer des éléments réactifs 15. Ainsi, la base 24, 240 des déflecteurs 16, 17 ; 160, 170 forme une butée axiale pour les éléments réactifs 15 en les retenant prisonniers à l'intérieur des canaux 13, 13'. Dans l'exemple illustré, les déflecteurs 16, 17 ; 160, 170 présentent une section circulaire, et les dimensions transversales correspondent à des diamètres. Certains canaux 13 du premier jeu comportent comme éléments réactifs 15 des petits cylindres en céramique qui peuvent bouger librement à l'intérieur de chaque canal 13 sans en sortir. Ainsi, le fluide en circulation à travers le dispositif 1, 100 et animé d'un mouvement tourbillonnaire bouscule et agite les éléments réactifs 15. Les éléments réactifs 15 sont mis en mouvement, se cognent entre eux s'ils sont plusieurs dans un même canal 13, tapent contre les parois des canaux 13 qui les contiennent, et provoquent l'émission d'ondes mécaniques sonores qui ont pour effet technique de détruire les boues et/ou les cristaux de calcaire présentes dans le fluide.

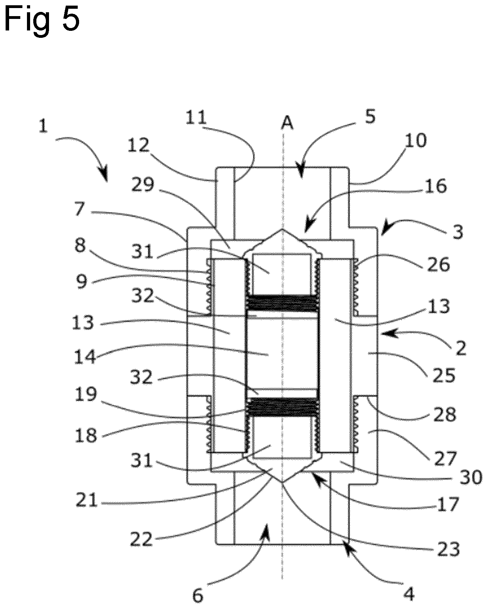

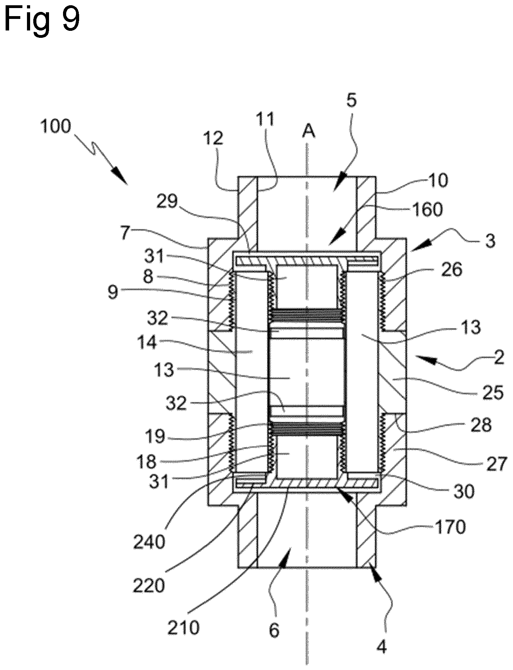

Les déflecteurs 16, 17 ; 160, 170 sont de préférence des pièces creuses et comportent chacun une cavité 31 fermée par un bouchon 32 (fig. 5 et 9). Ils peuvent eux aussi contenir un ou plusieurs éléments actifs 20 qui vont agir sur la structure moléculaire du fluide à son passage sur lesdits déflecteurs 16, 17 ; 160, 170. Le bouchon 32 peut être assemblé au déflecteur 16, 17 ; 160, 170 par tout moyen de fixation adapté, pour fermer de manière étanche ou non la cavité 31 correspondante, tel que par vissage. En fonction des applications, les cavités 31 des déflecteurs 16, 17 ; 160, 170, voire le tube central 14 s'il est creux, peuvent rester vides ou contenir un ou plusieurs éléments actifs 20 qui vont agir sur la structure moléculaire du fluide en circulation à travers ledit dispositif 1, 100. Ces éléments actifs 20 peuvent être choisis dans le groupe comprenant des émetteurs d'ondes mécaniques (sonores, ultrasonores, infrasonores), tels que des microémetteurs électroniques à batterie, des émetteurs de champ magnétique, tels que des aimants permanents, des émetteurs d'ondes électromagnétiques, tels que des électroaimants ou une combinaison de ces émetteurs. Les cavités 31 des déflecteurs 16, 17 ; 160, 170 peuvent être fermées de manière étanche ou non par les bouchons 32. De même, le tube central 14 peut également être fermé de manière étanche ou non par les déflecteurs 16, 17 ; 160, 170.

Le corps 2 comporte un tronçon central 25 entouré de deux tronçons d'extrémité 26, 27, le tronçon central 25 ayant une dimension transversale supérieure à celle des tronçons d'extrémité 26, 27, délimitant entre eux deux épaulements 28. Le corps 2 présentant une forme générale cylindrique, les dimensions transversales correspondent à des diamètres. Les épaulements 28 servent de butées axiales aux embout-raccords 3, 4 lorsqu'ils sont assemblés audit corps 2. La longueur des tronçons d'extrémité 26, 27 du corps 2 est inférieure à la profondeur des tronçons de montage 7 des embout-raccords 3, 4 pour créer deux chambres 29, 30 respectivement en aval de l'orifice d'entrée 5 et en amont de l'orifice de sortie 6. La chambre 29 en aval de l'orifice d'entrée 5 permet la répartition du fluide entrant dans le corps 2, et la chambre 30 en amont de l'orifice de sortie 6 permet la collecte du fluide sortant dudit corps 2. Le diamètre intérieur des embout-raccords 3, 4 correspondant aux orifices d'entrée 5 et de sortie 6 est inférieur au diamètre extérieur des tronçons d'extrémité 26, 27 du corps 2.

La première forme de réalisation du dispositif 1 est telle qu'il est symétrique par rapport à un plan transversal perpendiculaire à l'axe longitudinal A. Ainsi, le dispositif 1 est parfaitement réversible, son orifice d'entrée 5 pouvant devenir l'orifice de sortie et son orifice de sortie 6 pouvant devenir l'orifice d'entrée, selon le sens dans lequel il est raccordé à la canalisation. Cette réversibilité facile grandement son implantation dans une installation. Bien entendu, le dispositif pourrait ne pas être symétrique et donc non réversible si telle est la demande. C'est le cas de la seconde forme de réalisation du dispositif 100 qui n'est pas réversible compte tenu de la forme de ses déflecteurs 160, 170.

En outre, le choix d'assemblages démontables des déflecteurs 16, 17 ; 160, 170, de leur bouchon 32, et des embout-raccords 3, 4 permet de modifier leur contenu, le cas échéant celui du tube central 14, et de tout ou partie des canaux 13, 13', conférant au dispositif 1, 100 une modularité infinie pour répondre à toutes les applications possibles. A titre d'exemples non limitatifs, et selon les applications, le dispositif 1, 100 peut comporter des éléments réactifs 15 dans certains canaux 13, 13', combinés avec le vortex pour éviter la formation et le dépôt de boues dans les circuits fermés, ou le dispositif 1, 100 peut comporter comme élément actif 20 un ou plusieurs aimants permanents dans la cavité 31 des déflecteurs 16, 17 ; 160, 170, et le cas échéant dans le tube central 14, combiné avec des éléments réactifs 15 et le vortex pour éviter la formation et le dépôt de calcaire dans les circuits ouverts.

La fabrication du dispositif 1, 100 de l'invention peut faire appel à différents matériaux en fonction de l'application à laquelle le dispositif est destiné et en fonction de la nature du fluide à traiter. Les différentes pièces constituant ledit dispositif 1, 100, et en particulier le corps 2 et les déflecteurs 16, 17 ; 160, 170, peuvent être constituées chacune d'un bloc de matière métallique, plein et usiné, notamment en acier inoxydable, tel qu'un acier 316L de qualité alimentaire. Cette matière présente de nombreux avantages connus, tels que durabilité, résistance aux températures, résistance à la corrosion, inerte, non largage de particules fines, etc. Toutefois cet exemple n'est pas limitatif et s'étend à toute matière qui peut résister aux températures extrêmes du fluide à traiter, telle que le verre qui peut être moulé ou soufflé, les matières synthétiques et/ou composites qui peuvent être moulées, injectées, ou imprimées en trois dimensions, etc. En outre, les matières choisies peuvent contenir des matières recyclées et/ou peuvent être recyclables.

La mise en œuvre du dispositif 1, 100 est particulièrement simple puisqu'il suffit de le raccorder via ses embout-raccords 3, 4 entre deux raccords hydrauliques d'une canalisation de tout type d'installation eau potable, sanitaire, chauffage, climatisation, refroidissement, irrigation, etc. Il ne nécessite aucune alimentation d'énergie, aucun branchement externe, aucun produit chimique, aucun consommable, et aucune maintenance.

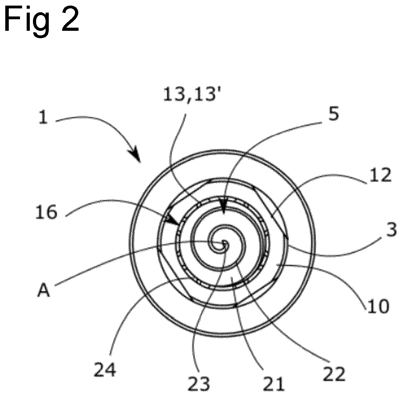

Lorsqu'il est raccordé, le dispositif 1, 100 est placé en série sur le trajet du fluide circulant dans ladite installation et ne perturbe aucunement son débit. Les pertes de charges qu'il engendre sont négligeables, voire nulles. Le fluide entrant dans le dispositif 1, 100 selon l'axe longitudinal A, tape le déflecteur 16, 160 situé au droit de l'orifice d'entrée 6 (voir figures 2 et 9). La spirale 22 du déflecteur 16 ou les pales inclinées 220 du déflecteur 160 a pour effet de dévier le fluide pour transformer son mouvement linéaire axial en un mouvement tourbillonnaire autour de l'axe longitudinal A formant un vortex dans le sens de la spirale 22 ou des pales inclinées 220, par exemple vers la droite. Le fluide animé de ce mouvement tourbillonnaire va entrer dans les canaux 13, 13' pour les traverser librement. Les canaux 13, 13' créent des réductions de passage de diamètres différents engendrant des turbulences au sein du fluide tourbillonnaire ainsi qu'une pluralité d'effets Venturi créant une accélération de la vitesse du fluide dans chaque canal. En traversant certains canaux 13, le fluide entraîne avec lui les éléments réactifs 15. Ces éléments réactifs 15, sous l'effet des turbulences et de la vitesse du fluide, sont perturbés, bousculés, chahutés, se mettent à osciller, entrent en vibration, se cognent, percutent les parois des canaux 13, et transmettent au fluide qui les traversent des ondes mécaniques sonores. Simultanément, le fluide est soumis aux éléments actifs 20 à travers les déflecteurs 16, 17 ; 160, 170, et reçoit un champ magnétique avant de ressortir du dispositif 1, 100. En sortie du dispositif 1, 100, le fluide a subi plusieurs phénomènes physiques tels que ceux qui se produisent dans le milieu naturel et qui ont pour effet d'oxygéner, de régénérer, de purifier, de restructurer et d'activer le fluide.

Le vortex a pour effet de créer des turbulences dans le flux et de remettre les boues en circulation. Les pierres ou les céramiques ont pour effet de casser les boues en émettant des ondes sonores. Les aimants permanents ont pour effet de déstructurer le carbonate de calcium et de magnésium formant le calcaire. La combinaison de tout ou partie de ces effets techniques permet avantageusement de modifier la structure moléculaire du fluide pour améliorer ses propriétés physicochimiques, de diminuer sa tension superficielle pour augmenter sa disponibilité et son assimilation, de transformer la structure cristalline du calcaire en aragonite inerte et non incrustante pour éradiquer les dépôts de calcaire, de pulvériser les particules de rouille et autres boues pour éradiquer l'encrassement des circuits, etc.
La présente invention n'est bien entendu pas limitée aux exemples de réalisation décrits mais s'étend à toute modification et variante évidentes pour un homme du métier sans sortir du cadre des revendications annexées.

## Revendications

1. Dispositif (100) de traitement mécanique d'un fluide tel que l'eau, agencé pour être disposé sur le trajet d'un fluide circulant dans une canalisation d'une installation, pour restructurer ledit fluide afin d'éviter notamment l'incrustation du calcaire et/ou la formation et le dépôt de boues et/ou les phénomènes de corrosion, ledit dispositif comportant un corps (2) d'axe longitudinal (A) pourvu à ses deux extrémités de deux embout-raccords (3, 4) délimitant un orifice d'entrée (5) de fluide et un orifice de sortie (6) de fluide, lesdits embout-raccords (3, 4) étant agencés pour monter ledit dispositif (100) en série dans ladite canalisation, ledit corps (2) comportant au moins un canal (13, 13') s'étendant entre ledit orifice d'entrée (5) et ledit orifice de sortie (6) pour le passage du fluide au travers dudit dispositif (100) et ledit dispositif (100) comportant des moyens agencés pour transformer un mouvement linéaire du fluide entrant dans ledit dispositif en un mouvement tourbillonnaire du fluide sortant dudit dispositif, lesdits moyens agencés pour transformer un mouvement linéaire du fluide entrant dans ledit dispositif en un mouvement tourbillonnaire du fluide sortant dudit dispositif comportant un déflecteur (1 60, 170) centré sur l'axe longitudinal (A), disposé en face dudit orifice d'entrée (5), intercalé entre ledit orifice d'entrée (5) et ledit corps (2) et pourvu de moyens de déviation pour dévier et créer un mouvement tourbillonnaire dudit fluide entrant dans ledit dispositif à la manière d'un Vortex, ledit corps (2) comportant une pluralité de canaux (13, 13') rectilignes, parallèles audit axe longitudinal (A), traversants, répartis autour et en aval dudit déflecteur (160, 170) , la section de passage de ladite pluralité desdits canaux (13, 13') étant égale ou très proche de la section de passage desdits embout-raccords (3, 4) correspondant à la section de passage de ladite canalisation de manière à limiter les pertes de charge, ledit dispositif comportant un tube central (14) s'étendant dans l'axe longitudinal (A), ledit déflecteur (160, 170) comportant un tronçon de montage (18) assemblé audit tube central (14) et une tête (210) pourvue desdits moyens de déviation du fluide et reliée audit tronçon de montage (18) par une base (240) , **caractérisé en ce que** la tête dudit déflecteur (160, 170) est une tête plate (210) perpendiculaire audit axe longitudinal (A), **en ce que** lesdits moyens de déviation du fluide sont constitués de pales (220) radiales et inclinées dans la direction du fluide dudit orifice d'entrée (6) vers ledit orifice de sortie (6), et **en ce qu'**au moins une partie desdits canaux (13, 13') forme un logement pour recevoir au moins un élément réactif (15) disposé librement sur le trajet dudit fluide en circulation à travers ledit dispositif (1), de sorte que ledit au moins un élément réactif (15) entre en vibration, percute les parois du canal qui le contient, et transmet au fluide des ondes mécaniques sonores ayant pour effet de détruire les boues et/ou les cristaux de calcaire présentes dans le fluide.

2. Dispositif selon la revendication 1, **caractérisé en ce qu'**il comporte deux déflecteurs (160, 170) comportant chacun des pales (220), disposés dans un même sens, en face respectivement dudit orifice d'entrée (5) et dudit orifice de sortie (6) de telle sorte que ledit dispositif (1) n'est pas réversible.

3. Dispositif selon la revendication 1, **caractérisé en ce que** lesdits canaux (13, 13') sont répartis régulièrement autour dudit tube central (14).

4. Dispositif selon la revendication 1, **caractérisé en ce que** lesdits canaux comportent au moins deux jeux de canaux (13, 13') de diamètres différents, alternés entre eux et distribués régulièrement autour dudit tube central (14).

5. Dispositif selon la revendication 1, **caractérisé en ce que** la base (240) desdits déflecteurs (160, 170) a une dimension transversale supérieure à la dimension transversale dudit tube central (14) et inférieure à la dimension transversale intérieure dudit corps (2) pour obturer partiellement au moins une partie desdits canaux (13, 13') et former une butée axiale pour ledit au moins un élément réactif (15).

6. Dispositif selon la revendication 5, **caractérisé en ce que** ledit au moins un élément réactif (15) est choisi dans le groupe de matières comprenant les céramiques, les minéraux, les matières organiques, le verre, les pierres précieuses et/ou semi-précieuses, ou une combinaison de ces matières, et **en ce qu'**il présente une forme choisie dans le groupe comprenant les billes, les granulés, les fragments, les cylindres, ces formes étant pleines ou creuses, ou une combinaison de ces formes.

7. Dispositif selon l'une quelconque des revendications précédentes, **caractérisé en ce que** ledit ou les deux déflecteurs (160, 170) sont creux et comportent une cavité (31) fermée par un bouchon (32), et **en ce qu'**ils comportent au moins un élément actif (20) logé dans ladite cavité (31), choisi dans le groupe comprenant des émetteurs d'ondes mécaniques, des émetteurs de champ magnétique, des émetteurs d'ondes électromagnétiques, ou une combinaison de ces émetteurs, et agencé pour transmettre au fluide lesdites ondes ayant pour effet de détruire les boues et/ou les cristaux de calcaire présentes dans le fluide.

8. Dispositif selon la revendication 7, **caractérisé en ce que** ledit tube central (14) est creux et forme un logement pour recevoir au moins un élément actif (20).

9. Dispositif selon l'une quelconque des revendications précédentes, **caractérisé en ce qu'**il constitue un dispositif modulaire, et **en ce que** l'assemblage des bouchons (32) sur les déflecteurs (160, 170) et/ou l'assemblage des déflecteurs (160, 170) sur le tube central (14) sont des assemblages démontables de sorte à pouvoir modifier le contenu desdites cavités (31), dudit tube central (14) et/ou desdits canaux (13, 13') en fonction du traitement d'eau à effectuer.

## Patentansprüche

1. Vorrichtung (100) zur mechanischen Behandlung eines Fluids wie Wasser, die so beschaffen ist, dass sie auf dem Weg eines in einer Rohrleitung einer Anlage zirkulierenden Fluids angeordnet werden kann, um das Fluid umzustrukturieren, um insbesondere die Verkrustung von Kalk und/oder die Bildung und Ablagerung von Schlämmen und/oder Korrosion zu vermeiden, wobei die Vorrichtung einen Körper (2) mit einer Längsachse (A) umfasst, der an seinen beiden Enden mit zwei Verbindungsstutzen (3, 4) versehen ist, die eine Fluideintrittsöffnung (5) und eine Fluidaustrittsöffnung (6) begrenzen, wobei die Verbindungsstutzen (3, 4) so angeordnet sind, dass sie die Vorrichtung (100) in Reihe in der Rohrleitung montieren, wobei der Körper (2) mindestens einen Kanal (13, 13') aufweist, der sich zwischen der Eintrittsöffnung (5) und der Austrittsöffnung (6) für den Durchfluss des Fluids durch die Vorrichtung (100) erstreckt, und wobei die Vorrichtung (100) Mittel umfasst, die so angeordnet sind, dass sie eine lineare Bewegung des in die Vorrichtung eintretenden Fluids in eine Wirbelbewegung des aus der Vorrichtung austretenden Fluids umwandeln, wobei die Mittel, die so angeordnet sind, dass sie eine lineare Bewegung des in die Vorrichtung eintretenden Fluids in eine Wirbelbewegung des aus der Vorrichtung austretenden Fluids umwandeln, einen Deflektor (160, 170) umfassen, der sich auf der Längsachse (A) befindet und gegenüber der Eintrittsöffnung (5) zwischen der Einlassöffnung (5) und dem Körper (2) angeordnet und mit Ablenkmitteln versehen ist, um das in die Vorrichtung eintretende Fluid in einer Art Wirbel abzulenken und eine Wirbelbewegung zu erzeugen, wobei der Körper (2) eine Vielzahl von geradlinigen, parallel zur Längsachse (A) verlaufenden, durchgehenden Kanälen (13, 13') aufweist, die um und stromabwärts des Deflektors (160, 170) verteilt sind, wobei der Durchflussquerschnitt der Vielzahl der Kanäle (13, 13') gleich oder sehr nahe dem Durchflussquerschnitt der Verbindungsstutzen (3, 4) ist, der dem Durchflussquerschnitt der Rohrleitung entspricht, um auf diese Weise die Druckverluste zu begrenzen, wobei die Vorrichtung ein zentrales Rohr (14) umfasst, das sich in der Längsachse (A) erstreckt, wobei der Deflektor (160, 170) einen Montageabschnitt (18) umfasst, der am zentralen Rohr (14) montiert ist, und einen Kopf (210), der mit den Mitteln zur Ablenkung des Fluids versehen ist und mit dem Montageabschnitt (18) über eine Unterlage (240) verbunden ist, **dadurch gekennzeichnet, dass** der Deflektorkopf (160, 170) ein flacher Kopf (210) senkrecht zur Längsachse (A) ist, dass die Mittel zur Ablenkung des Fluids aus Schaufeln (220) bestehen, die radial angeordnet und in der Richtung des Fluids von der Eintrittsöffnung (6) zur Austrittsöffnung (6) geneigt sind, und dass mindestens ein Teil der Kanäle (13, 13') eine Aufnahme bildet, um mindestens ein reaktives Element (15) aufzunehmen, das frei auf dem Weg des Fluids angeordnet ist, das durch die Vorrichtung (1) strömt, so dass das mindestens eine reaktive Element (15) in Schwingung versetzt wird, auf die Wände des Kanals prallt, in dem es enthalten ist, und mechanische Schallwellen auf das Fluid überträgt, die bewirken, dass der Schlamm und/oder die Kalkkristalle in dem Fluid vernichtet werden.

2. Vorrichtung nach Anspruch 1, **dadurch gekennzeichnet, dass** sie zwei Deflektoren (160, 170) umfasst, die jeweils Schaufeln (220) umfassen, die in einer gleichen Richtung gegenüber der Eintrittsöffnung (5) bzw. der Austrittsöffnung (6) angeordnet sind, so dass die Vorrichtung (1) nicht umkehrbar ist.

3. Vorrichtung nach Anspruch 1, **dadurch gekennzeichnet, dass** die Kanäle (13, 13') gleichmäßig um das zentrale Rohr (14) herum verteilt sind.

4. Vorrichtung nach Anspruch 1, **dadurch gekennzeichnet, dass** die Kanäle mindestens zwei Kanalsätze (13, 13') mit unterschiedlichen Durchmessern umfassen, die sich untereinander abwechseln und gleichmäßig um das zentrale Rohr (14) verteilt sind.

5. Vorrichtung nach Anspruch 1, **dadurch gekennzeichnet, dass** die Unterlage (240) der Deflektoren (160, 170) eine Querabmessung aufweist, die größer als die Querabmessung des zentralen Rohrs (14) und kleiner als die innere Querabmessung des Körpers (2) ist, um mindestens einen Teil der Kanäle (13, 13') teilweise zu verschließen und einen axialen Anschlag für das mindestens eine reaktive Element (15) zu bilden.

6. Vorrichtung nach Anspruch 5, **dadurch gekennzeichnet, dass** das mindestens eine reaktive Element (15) aus der Gruppe von Materialien ausgewählt ist, die Keramiken, Mineralien, organische Materialien, Glas, Edelsteine und/oder Halbedelsteine oder eine Kombination dieser Materialien umfasst, und dass es eine Form aufweist, die aus der Gruppe ausgewählt ist, die aus Kugeln, Granulaten, Fragmenten, Zylindern besteht, wobei diese Formen massiv oder hohl sind, oder eine Kombination dieser Formen.

7. Vorrichtung nach einem der vorhergehenden Ansprüche, **dadurch gekennzeichnet, dass** der oder die beiden Deflektoren (160, 170) hohl sind und eine Vertiefung (31) aufweisen, die durch einen Stopfen (32) verschlossen ist, und dass sie mindestens ein aktives Element (20) umfassen, das in der Vertiefung (31) untergebracht ist, das aus der Gruppe ausgewählt ist, die aus Emittern mechanischer Wellen, Magnetfeld-Emittern, Emittern elektromagnetischer Wellen oder einer Kombination dieser Emitter besteht, und das so angeordnet ist, dass es die Wellen, welche die in dem Fluid vorhandenen Schlämme und/oder Kalkkristalle vernichten, auf das Fluid überträgt.

8. Vorrichtung nach Anspruch 7, **dadurch gekennzeichnet, dass** das zentrale Rohr (14) hohl ist und eine Aufnahme für mindestens ein aktives Element (20) bildet.

9. Vorrichtung nach einem der vorhergehenden Ansprüche, **dadurch gekennzeichnet, dass** sie eine modulare Vorrichtung darstellt und dass die Montage der Stopfen (32) auf den Deflektoren (160, 170) und/oder die Montage der Deflektoren (160, 170) am zentralen Rohr (14) abnehmbare Verbindungen sind, so dass der Inhalt der Vertiefungen (31), des zentralen Rohrs (14) und/oder der Kanäle (13, 13') in Abhängigkeit von der durchzuführenden Wasseraufbereitung verändert werden kann.

## Claims

1. Device (100) for mechanically treating a fluid such as water, arranged to be disposed in the path of a fluid circulating in a pipe of a facility, in order to restructure said fluid in order to avoid, in particular, the incrustation of limestone and/or the formation and deposition of sludge and/or corrosion phenomena, said device comprising a body (2) with a longitudinal axis (A) provided at its two ends with two connecting end pieces (3, 4) delimiting a fluid inlet orifice (5) and a fluid outlet orifice (6), said connecting end pieces (3, 4) being arranged to mount said device (100) in series in said pipe, said body (2) comprising at least one channel (13, 13') extending between said inlet orifice (5) and said outlet orifice (6) for the passage of the fluid through said device (100), and said device (100) comprising means arranged to transform a linear movement of the fluid entering said device into a swirling movement of the fluid leaving said device, said means arranged to transform a linear movement of the fluid entering said device into a swirling movement of the fluid leaving said device comprising a baffle (160, 170) centred on the longitudinal axis (A), arranged facing said inlet orifice (5), interposed between said inlet orifice (5) and said body (2) and provided with deflection means for deflecting and creating a swirling movement of said fluid entering said device in the manner of a vortex, said body (2) comprising a plurality of rectilinear channels (13, 13'), parallel to said longitudinal axis (A), bored-through, distributed around and downstream of said baffle (160, 170), the passage section of said plurality of said channels (13, 13') being equal to or very close to the passage section of said connecting end pieces (3, 4) corresponding to the passage section of said pipe so as to limit load losses, said device comprising a central tube (14) extending along the longitudinal axis (A), said baffle (160, 170) comprising a mounting section (18) assembled with said central tube (14) and a head (210) provided with said means for deflecting the fluid and connected to said mounting section (18) by a base (240), **characterised in that** the head of said baffle (160, 170) is a flat head (210) perpendicular to said longitudinal axis (A), **in that** said means for deflecting the fluid consist of radial blades (220) which are tilted in the direction of the fluid from said inlet orifice (6) towards said outlet orifice (6), and **in that** at least part of said channels (13, 13') forms a housing for receiving at least one reactive element (15) arranged freely in the path of said fluid circulating through said device (1), such that said at least one reactive element (15) vibrates, strikes the walls of the channel which contains it, and transmits to the fluid mechanical sound waves which have the effect of destroying the sludge and/or limestone crystals present in the fluid.

2. Device according to claim 1, **characterised in that** it comprises two baffles(160, 170) each comprising blades (220), disposed in the same direction, facing respectively said inlet orifice (5) and said outlet orifice (6) such that said device (1) is not reversible.

3. Device according to claim 1, **characterised in that** said channels (13, 13') are evenly distributed around said central tube (14).

4. Device according to claim 1, **characterized in that** said channels comprise at least two sets of channels (13, 13') with different diameters, alternating with each other and evenly distributed around said central tube (14).

5. Device according to claim 1, **characterised in that** the base (240) of said baffles(160, 170) has a transverse dimension greater than the transverse dimension of said central tube (14) and lower than the internal transverse dimension of said body (2) to partially block at least part of said channels (13, 13') and form an axial stop for said at least one reactive element (15).

6. Device according to claim 5, **characterised in that** said at least one reactive element (15) is selected from the group of materials comprising ceramics, minerals, organic materials, glass, precious and/or semi-precious stones, or a combination of these materials, and **in that** it has a shape selected from the group comprising beads, granules, fragments, cylinders, these shapes being solid or hollow, or a combination of these shapes.

7. Device according to any one of the preceding claims, **characterised in that** said baffle(s) (160, 170) are hollow and comprise a cavity (31) closed by a plug (32), and **in that** they comprise at least one active element (20) housed in said cavity (31), selected from the group comprising mechanical wave transmitters, magnetic field transmitters, electromagnetic wave transmitters, or a combination of these transmitters, and arranged to transmit to the fluid said waves having the effect of destroying the sludge and/or limestone crystals present in the fluid.

8. Device according to claim 7, **characterised in that** said central tube (14) is hollow and forms a housing for receiving at least one active element (20).

9. Device according to any one of the preceding claims, **characterized in that** it constitutes a modular device, and **in that** the assembly of the plugs (32) on the baffles (160, 170) and/or the assembly of the baffles (160, 170) on the central tube (14) are dismountable assemblies so as to be able to modify the content of said cavities (31), of said central tube (14) and/or of said channels (13, 13') according to the water treatment to be carried out.
